Europäisches Patentamt

European Patent Office

Office européen des brevets

(19)

(11) Numéro de publication : **0 021 932**

**B1**

(12)

# FASCICULE DE BREVET EUROPÉEN

(45) Date de publication du fascicule du brevet :
13.07.83

(21) Numéro de dépôt : 80400817.5

(22) Date de dépôt : 06.06.80

(51) Int. Cl.³ : **H 04 Q   3/68**, H 04 Q 11/04

(54) **Réseau de commutation et centre de télécommunications comportant un tel réseau.**

(30) Priorité : 12.06.79 FR 7914966
25.06.79 FR 7916241

(43) Date de publication de la demande :
07.01.81 Bulletin 81/01

(45) Mention de la délivrance du brevet :
13.07.83 Bulletin 83/28

(84) Etats contractants désignés :
**BE DE GB IT NL**

(56) Documents cités :
**DE A 2 538 656**
**FR A 1 526 799**
**FR A 2 366 754**

(73) Titulaire : **THOMSON-CSF TELEPHONE**
**146, Boulevard de Valmy**
**F-92707 Colombes (FR)**

(72) Inventeur : **Dieudonne, Marc Paul Georges**
**"THOMSON-CSF" - SCPI 173 Boulevard Haussmann**
**F-75360 Paris Cedex 08 (FR)**
Inventeur : **Raillard, Yves Gaston**
**"THOMSON-CSF" - SCPI 173 Boulevard Haussmann**
**F-75360 Paris Cedex 08 (FR)**
Inventeur : **Gelenbe, Sami Erol**
**"THOMSON-CSF" - SCPI 173 Boulevard Haussmann**
**F-75360 Paris Cedex 08 (FR)**

(74) Mandataire : **El Manouni, Josiane et al**
**THOMSON-CSF SCPI 173, Bld Haussmann**
**F-75379 Paris Cedex 08 (FR)**

Jouve, 18, rue St-Denis, 75001 Paris, France

Réseau de commutation et centre de télécommunications comportant un tel réseau

L'invention concerne un réseau de commutation capable de traiter n'importe quel type de données numériques ou mises sous forme numérique. Ce réseau peut être utilisé dans les centres de télécommunications notamment dans les centraux téléphoniques, c'est-à-dire que les différents ensembles de commutation ou opérateurs sont réunis dans un même lieu.

On appelle réseau de commutation un ensemble d'opérateurs de commutation ou commutateur et de liaisons constituées par des voies de transmission numériques, chaque voie reliant deux opérateurs et comportant les deux sens de communications.

On appelle degré d'un opérateur le nombre p d'opérateurs du réseau auxquels il est directement relié par une liaison.

Le brevet français n° 1 526 799 décrit un réseau de commutation comportant 16 nœuds $N_{i,j}$ disposés selon une matrice carrée de quatre lignes et de quatre colonnes (i et j étant variables de 1 à 4), et dans lequel le nœud $N_{i,j}$ est relié aux nœuds $N_{i+1,j}$ et $N_{i,j+1}$.

Dans des réseaux connus, tels que celui décrit par la demande de brevet français publié sous le n° 2 366 754, on commute généralement un seul type de données et l'on a donc un seul type de contrainte.

D'autre part, le nombre de chemins indépendants entre deux opérateurs étant assez restreint, la défaillance d'un opérateur peut entraîner des perturbations pour tous les opérateurs qui en dépendent et on est obligé de prévoir des systèmes de sécurité pour limiter les perturbations dans le trafic, ce qui complique la maintenance.

Enfin, l'extension de tels réseaux nécessite d'importants travaux d'adaptation tant au point de vue câblage qu'au point de vue logiciel.

La transmission en mode paquets convient particulièrement au réseau de commutation conforme à l'invention capable de traiter n'importe quel type de données numériques, car elle offre une très grande souplesse en ce qui concerne les données commutées. Pour traiter les informations de n'importe quel type (téléphonie, télex, données informatiques, etc...) il faut respecter les contraintes du mode de transmission le plus exigeant qui est la téléphonie pour laquelle le temps de transfert des informations dans le central doit être de l'ordre de la milliseconde.

Pour respecter cette contrainte de temps, l'architecture du réseau décrit par l'invention permet de minimiser la « distance » parcourue par les informations dans le central, la « distance » étant le nombre d'opérateurs traversés plus un.

D'autre part, le réseau conforme à l'invention comporte moins d'opérateurs que les réseaux connus pour un même nombre total V de voies à commuter et pour une même capacité nominale m pour chaque opérateur.

En outre, le réseau conforme à l'invention, interconnecte les opérateurs de façon à assurer une accessibilité totale et une excellente sécurité, c'est-à-dire qu'il existe le plus grand nombre possible de chemins indépendants entre deux opérateurs quelconques du réseau.

Enfin, un réseau incomplet conforme à l'invention a les mêmes propriétés que le réseau complet, l'extension ne nécessite aucun recâblage et le pas d'extension est suffisamment petit pour minimiser le coût du réseau en fonction du trafic.

Selon une caractéristique de l'invention, dans un réseau de commutation D (p, k, a) comportant N opérateurs, chaque opérateur est relié par p liaisons à p autres opérateurs du réseau, p étant un nombre entier pair, les N opérateurs sont répartis sur h colonnes, chaque colonne comporte $(P/2)^k$ opérateurs, h et k étant deux nombres quelconques et h étant égal à k + a, et un opérateur quelconque de coordonnées (i, j), i étant la colonne ($1 \leqslant i \leqslant h$) sur laquelle se situe l'opérateur et j étant le rang de l'opérateur dans la colonne ($1 \leqslant j \leqslant (P/2)^k$), est relié par P/2 liaisons à P/2 opérateurs Ax ($1 \leqslant x \leqslant P/2$) de la colonne suivante, Ax ayant pour coordonnées :

$$((i + 1) \text{ modulo } h, [x + P/2 (j - 1)] \text{ modulo } (P/2)^k)$$

D'autres caractéristiques de la présente invention apparaîtront plus clairement à la lecture de la description suivante d'un exemple de réalisation, cette description étant faite en relation avec les dessins ci-annexés dans lesquels :

la figure 1 représente schématiquement, dans l'espace, la disposition des opérateurs d'un réseau de commutation D (p, k, a) conforme à l'invention ;

la figure 2a représente, dans l'espace, un exemple de réseau de commutation conforme à l'invention pour lequel p est égal à 4, k est égal à 3 et a est égal à 2, que l'on désigne par D (4, 3, 2) ;

la figure 2b représente le même réseau D (4, 3, 2) que la figure 2a mais, dans le plan ;

la figure 3 représente un exemple de réseau complet selon l'invention de type D (p, k, 1) désigné par R (p, k), dans lequel p est égal à 4 et k à 3, et dont la structure est répartie ;

la figure 4 montre quatre chemins indépendants entre le premier opérateur de la première génératrice et le huitième opérateur de la troisième génératrice dans le réseau représenté à la figure 1 ;

les figures 5a à 5h montrent la procédure d'extension du réseau R (4, 3) depuis le module initial (fig. 3a) jusqu'au réseau complet (fig. 3h) ;

la figure 6 représente un exemple de réseau complet selon l'invention de type D (p, k, o), désigné par G (p, k) dans lequel p est égal à 4 et k à 3, et dont la structure est hiérarchisée ;

la figure 7 montre deux chemins indépendants entre le premier et le sixième opérateur de la première génératrice ou génératrice terminal, dans le réseau G (4, 3) représenté à la figure 1 ;

les figures 8a à 8d montrent la procédure d'extension du réseau G (4, 3) depuis le module initial (fig. 8a) jusqu'au réseau complètement équipé (fig. 8d).

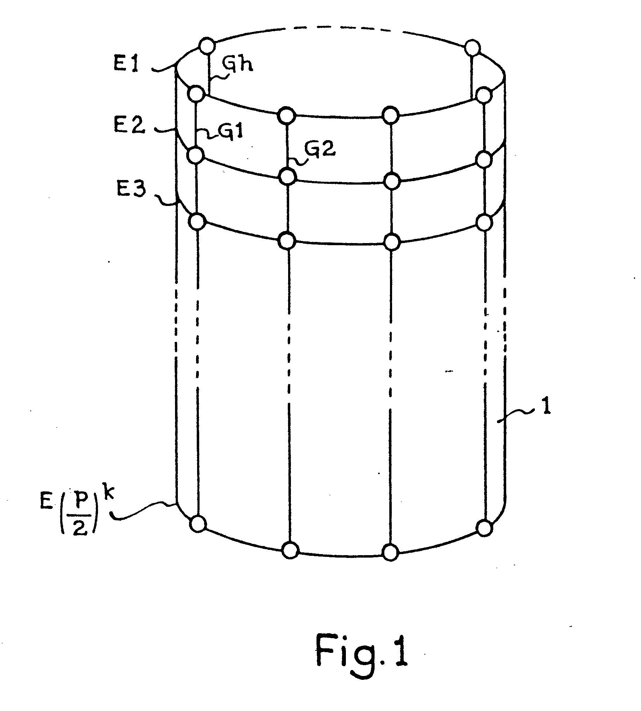

La figure 1 schématise, dans l'espace, comment les opérateurs d'un réseau de commutation conforme à l'invention peuvent être représentés comme étant plaqués sur la surface d'un cylindre 1, car la loi de câblage entraîne un certain bouclage.

Les opérateurs sont placés d'une part en ligne suivant h génératrices numérotées de 1 à h et désignées par Gl à Gh sur la figure 1, et d'autre part en cercle suivant $(P/2)^k$ étages numérotés de 1 à $(P/2)^k$ et désignés par E1 à E $(P/2)^k$ sur la figure 1, h et k étant des entiers quelconques.

Le nombre d'opérateurs d'une génératrice est donc $(P/2)^k$, c'est-à-dire une puissance exacte du demi-degré (P/2) d'un opérateur, ce qui assure une loi de brassage périodique et régulière.

Le nombre total N d'opérateurs dans le réseau est égal à $(P/2)^k \cdot h$ et si l'on pose h = k + a, le réseau est défini par les trois paramètres p, k et a et on le désigne par D (p, k, a).

La loi de câblage des opérateurs d'une génératrice Gi à ceux de la suivante G (i + l) est identique quel que soit i, i étant compris entre l et h, et h + l étant égal à l ce qui correspond au bouclage du réseau.

La loi de câblage est définie de la façon suivante : un opérateur quelconque de coordonnées (i, j), i étant le numéro de la génératrice (l ⩽ i ⩽ h) sur laquelle il se situe et j étant le rang de l'opérateur dans la génératrice, c'est-à-dire le numéro de l'étage, (l ⩽ j ⩽ $(P/2)^k$) est relié par P/2 liaisons à P/2 opérateurs Ax (l ⩽ x ⩽ P/2) de la génératrice suivante, Ax ayant pour coordonnées :

(i + l) modulo h, [x + P/2(j − l)] modulo $(P/2)^k$.

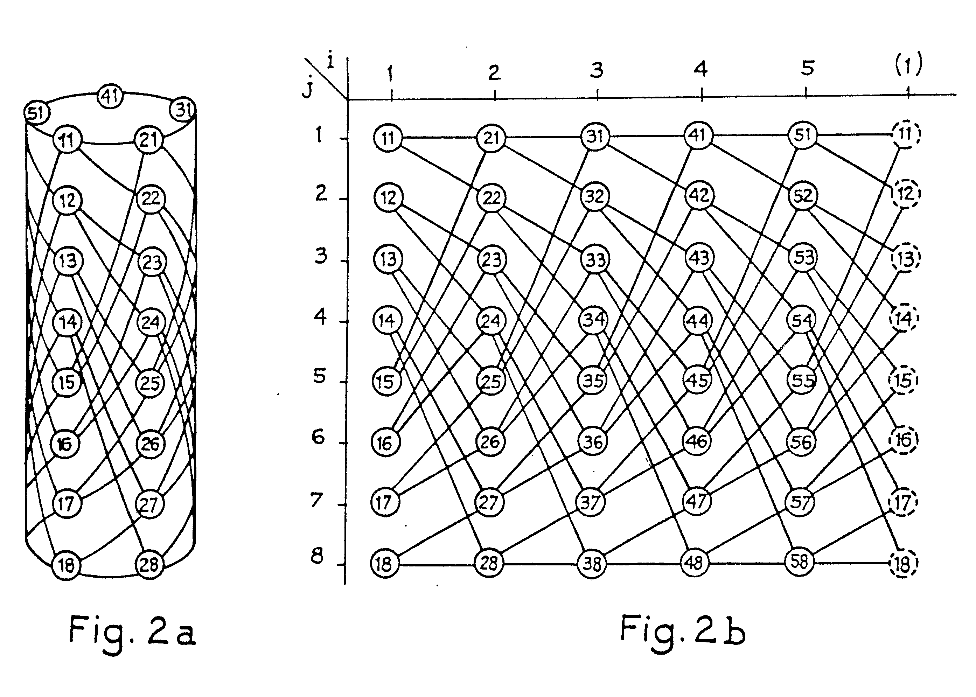

Les figures 2a et 2b représentent le même exemple de réseau D (p, k, a) pour lequel p est égal à 4, k est égal à 3 et a est égal à 2.

A la figure 2a, le réseau D (4, 3, 2) est représenté dans l'espace de la façon décrite à la figure 1 ; le câblage conforme à la loi énoncée ci-dessus y est représenté.

Dans ce cas particulier, la loi de câblage devient : un opérateur de coordonnées (i, j) pour lequel 1 ⩽ i ⩽ 5 et 1 ⩽ j ⩽ 8 est relié à deux opérateurs de la génératrice suivante : A1 de coordonnées ((i + 1) modulo 5, [1 + 2 (j − 1)] modulo 8) et A2 de coordonnées ((i + 1) modulo 5, (2 j) modulo 8).

Ce câblage est décrit de façon détaillée, en relation avec la figure 2b.

Le réseau D (4, 3, 2) comporte 5 génératrices de huit opérateurs, ce qui fait quarante opérateurs.

La première génératrice faisant suite à la cinquième au point de vue câblage, on l'a représenté une seconde fois en pointillé à la suite de la cinquième afin d'obtenir une représentation dans le plan. Un opérateur de coordonnées (i, j) porte la référence ij sur la figure 2b.

Chaque opérateur est relié par deux liaisons à deux opérateurs de la génératrice précédente et à deux opérateurs de la génératrice suivante.

La loi de câblage étant identique entre deux génératrices successives, on se contente de décrire avec précision les connexions entre la première et la seconde génératrice, en appliquant les formules qui donnent les coordonnées de A1 et A2 en fonction de i et j.

L'opérateur 11 est relié aux opérateurs 21 et 22.

L'opérateur 12 est relié aux opérateurs 23 et 24.

L'opérateur 13 est relié aux opérateurs 25 et 26.

L'opérateur 14 est relié aux opérateurs 27 et 28.

L'opérateur 15 est relié aux opérateurs 21 et 22.

L'opérateur 16 est relié aux opérateurs 23 et 24.

L'opérateur 17 est relié aux opérateurs 25 et 26.

L'opérateur 18 est relié aux opérateurs 27 et 28.

Un réseau D (p, k, a) conforme à l'invention peut faire l'objet de diverses applications suivant la nature des opérateurs utilisés.

Un premier exemple d'application consiste en l'utilisation d'opérateurs tous identiques, qui comportent chacun un niveau de commutation relié aux autres opérateurs du réseau, une interface vers l'extérieur du réseau et un niveau supérieur constitué par un microcalculateur de commande du niveau de commutation et de l'interface.

Ces opérateurs étant tous identiques et reliés à l'extérieur, ils ont tous le même niveau hiérarchique et l'on a conféré au réseau une structure répartie.

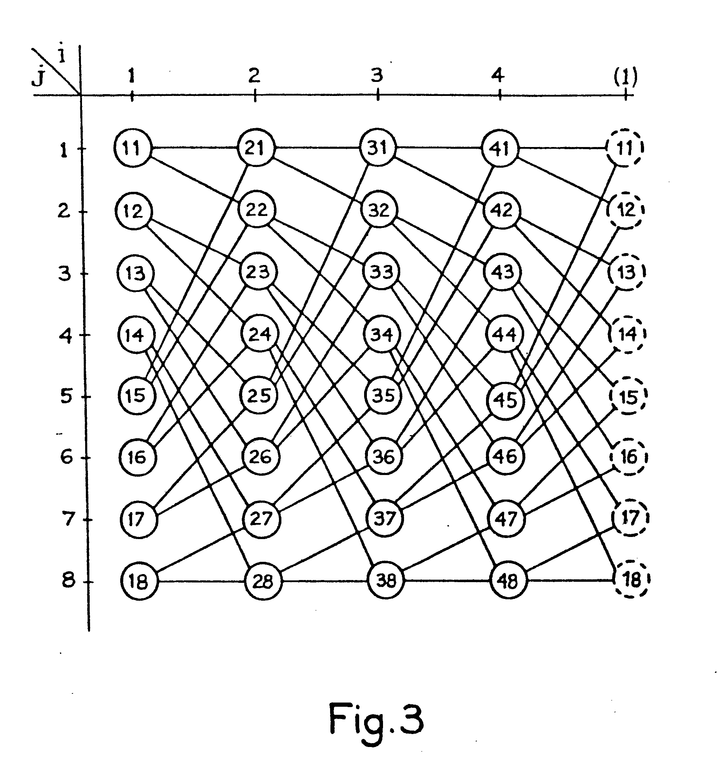

La figure 3 représente un réseau D (p, k, l), désigné par R (p, k), conforme à l'invention pour lequel k est égal à 3 et p à 4, et dont la structure est répartie.

Ce réseau comporte quatre génératrices et huit nœuds par génératrice, il comprend donc trente-deux opérateurs.

La première génératrice faisant suite à la quatrième au point de vue connexion, on l'a représenté une seconde fois en pointillé à la suite de la quatrième afin que la figure soit plus claire. Les nœuds de la première génératrice portent les références 11 à 18, ceux de la deuxième les références 21 à 28, ceux de la troisième les références 31 à 38 et ceux de la quatrième les références 41 à 48.

Chaque nœud est relié par deux liaisons à deux nœuds de la génératrice précédente et par deux autres liaisons à deux nœuds de l'étage suivant.

3

Les connexions avec la génératrice suivante sont établies de la façon suivante : la $j^{ème}$ borne (j = 1, 2) du $i^{ème}$ nœud (i = 1 à 8) est reliée au $[(j + 2(i − 1))$ modulo 8$]^{ème}$ nœud de la génératrice suivante.

Donc, la première borne (j = 1) du premier nœud (i = 1) de chaque génératrice est reliée au premier nœud de la génératrice suivante et la deuxième borne (j = 2) du premier nœud (i = 1) de chaque génératrice est reliée au second nœud de la génératrice suivante. Ainsi le nœud 11 est relié aux nœuds 21 et 22.

Le première borne (j = 1) du deuxième nœud (i = 2) de chaque génératrice est reliée au troisième nœud de la génératrice suivante et la deuxième borne (j = 2) du deuxième nœud (i = 2) de chaque génératrice est reliée au quatrième nœud de la génératrice suivante. Ainsi le nœud 12 est relié aux nœuds 23 et 24.

La première borne (j = 1) du troisième nœud (i = 3) de chaque génératrice est reliée au cinquième nœud de la génératrice suivante et la seconde borne (j = 2) du troisième nœud (i = 3) de chaque génératrice est reliée au sixième nœud de l'étage suivant. Ainsi le nœud 13 est relié aux nœuds 25 et 26.

La première borne (j = 1) du quatrième nœud (i = 4) de chaque génératrice est reliée au septième nœud de la génératrice suivante et la seconde borne (j = 2) du quatrième nœud (i = 4) de chaque génératrice est reliée au huitième nœud de la génératrice suivante. Ainsi le nœud 14 est relié aux nœuds 27 et 28.

La première borne (j = 1) du cinquième nœud (i = 5) de chaque génératrice est reliée au premier nœud de la génératrice suivante et la seconde borne (j = 2) du cinquième nœud (i = 5) de chaque génératrice est reliée au deuxième nœud de la génératrice suivante. Ainsi le nœud 15 est relié aux nœuds 21 et 22.

La première borne (j = 1) du sixième nœud (i = 6) de chaque génératrice est reliée au troisième nœud de la génératrice suivante et la seconde borne (j = 2) du sixième nœud (i = 6) de chaque génératrice est reliée au quatrième nœud de la génératrice suivante. Ainsi le nœud 16 est relié aux nœuds 23 et 24.

La première borne (j = 1) du septième nœud (i = 7) de chaque génératrice est reliée au cinquième nœud de la génératrice suivante et la seconde borne (j = 2) du septième nœud (i = 7) de chaque génératrice est reliée au sixième nœud de la génératrice suivante. Ainsi, le nœud 17 est relié aux nœuds 25 et 26.

La première borne (j = 1) du huitième nœud (i = 8) et dernier nœud de chaque génératrice est reliée au septième nœud de la génératrice suivante et la seconde borne (j = 2) du huitième (i = 8) et dernier nœud de chaque génératrice est reliée au huitième nœud de la génératrice suivante. Ainsi, le nœud 18 est relié aux nœuds 27 et 28.

Un exemple R (4, 3) de réseau R (p, k) conforme à l'invention étant décrit, on expose les propriétés de ces réseaux.

Tout d'abord, tous les nœuds d'une même génératrice jouent un rôle identique et tous les étages jouent un rôle identique, par conséquent, tout nœud joue un rôle identique à tous les autres nœuds.

Cette propriété des réseaux R (p, k) implique, entre autres, que pour calculer les distances (égales au nombre d'opérateurs traversés plus un) maximale TM et moyenne Tm entre deux opérateurs quelconques du réseau, il suffit d'évaluer les distances d'un nœud déterminé à tous les autres nœuds ; ce qui demande N − 1 évaluations, si N est le nombre total d'opérateurs qui est égal à $(k + 1) (p/2)^k$. Tandis que dans le cas d'un réseau quelconque, ce calcul nécessite $C_N^2$ évaluations.

Dans un réseau, conforme à l'invention, on a une distance maximale TM égale à 3, si k est égal à 2, et égale à $2k − E(k/2 + 1)$ si k est supérieur à 2, $E(k/2 + 1)$ étant la partie entière de $(k/2 + 1)$.

On donne dans le tableau I suivant les distances maximales TM et des majorants des distances moyennes Tm pour des exemples de réseaux R (p, k) conformes à l'invention.

Tableau I

| p | 2 | 3 | 4 | 5 | 6 | 7 | 8 | 9 | k |
|---|---|---|---|---|---|---|---|---|---|
| 4 | 12 | 32 | 80 | 192 | 448 | 1 024 | 2 304 | 5 120 | N |
| | 3 | 4 | 5 | 7 | 8 | 10 | 11 | 13 | $T_M$ |
| | 1,83 | 2,6 | 3,45 | 5,23 | 7 | 8,25 | 9,44 | 10,7 | Major. de $T_m$ |
| 6 | 27 | 108 | 405 | 1 458 | 5 103 | 17 496 | 59 049 | 196 830 | N |
| | 3 | 4 | 5 | 7 | 8 | 10 | 11 | 13 | $T_M$ |
| | 2 | 3,06 | 4,18 | | 7 | 8,25 | 9,44 | 10,7 | Major. de $T_m$ |

Tableau I

| k \\ p | 2 | 3 | 4 | 5 | 6 | 7 | 8 | 9 | |
|---|---|---|---|---|---|---|---|---|---|
| | 48 | 256 | 1 280 | 6 144 | 28 672 | 131 072 | 589 824 | $2,6.10^6$ | N |
| 8 | 3 | 4 | 5 | 7 | 8 | 10 | 11 | 13 | $T_M$ |
| | 2,08 | 3,25 | 4,28 | | 7 | 8,25 | 9,44 | 10,7 | Major. de $T_m$ |
| | 75 | 500 | 3 125 | | | | | | N |
| | 3 | 4 | 5 | | | | | | $T_M$ |
| | | | | | | | | | Major. de $T_m$ |
| | 108 | 864 | 6 480 | | | | | | N |
| 12 | 3 | 4 | 5 | | | | | | $T_M$ |
| | | | | | | | | | Major. de $T_m$ |
| | 192 | 2 048 | 20 480 | | | | | | N |
| 16 | 3 | 4 | 5 | | | | | | $T_M$ |
| | | | | | | | | | Major. de $T_m$ |

Dans les réseaux de commutation, il est important de minimiser la distance maximale TM, car la durée maximale de traversée du réseau en dépend.

Dans le cas d'une transmission par paquets autodirigés, la longueur des en-têtes, qui indiquent les différents opérateurs à traverser, dépend également de cette distance maximale TM.

La distance moyenne Tm doit également être minimisée car la capacité globale de commutation des opérateurs en est directement fonction. En effet, si le débit injecté au réseau est égal à A Meb/s, le débit total écoulé dans l'ensemble des mailles du réseau est A.Tm.

Dans les réseaux R (p, k) conformes à l'invention les distances Tm et TM sont proches du minimum théorique. Pour tout graphe régulier de N nœuds dans lequel chaque nœud est relié directement à p nœuds, le minimum théorique de TM vérifie la formule suivante :

$$N = p(p - 1)^{T_M} - 2/p - 2$$

Le fait que tout nœud joue un rôle identique à tous les autres nœuds implique également une simplification des algorithmes de recherche de chemin et de diffusion ainsi qu'un câblage d'une grande régularité voire même d'une simple répétitivité.

Une autre propriété de ces réseaux R (p, k) est d'offrir la plus grande sécurité possible.

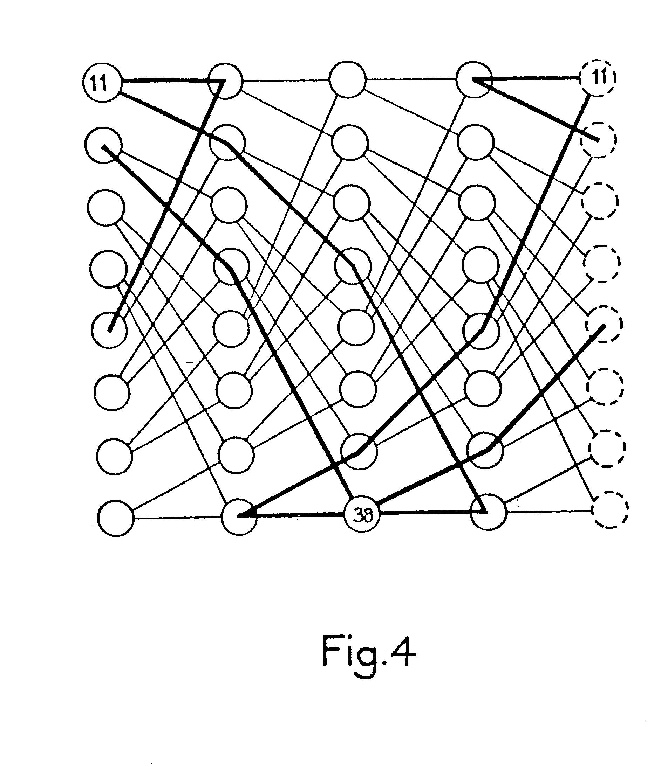

En effet, pour tout couple d'opérateurs, il est toujours possible de trouver p chemins indépendants pour ce qui est des liaisons et des nœuds empruntés, c'est-à-dire que chaque liaison et chaque nœud sont utilisés au plus une fois. A la figure 4, on a représenté dans le réseau R (4, 3) quatre chemins indépendants entre le nœud 11 et le nœud 38. Ces quatre chemins sont les suivants :

11-21-15-47-38
11-22-34-48-38
11-41-12-24-38
11-45-37-28-38

D'autre part, en cas de défaillance d'un opérateur entraînant sa mise hors service, la distance maximale TM entre tout couple d'opérateurs restant en service n'augmente que d'une unité pour les réseaux où k est impair et de deux unités pour les réseaux où k est pair.

Enfin, la mise hors service d'un opérateur a une influence très faible sur la distance moyenne Tm et par conséquent sur le débit total écoulé.

**0 021 932**

Une autre propriété du réseau R (p, k) réside dans les procédures d'extension ; l'une d'elles, particulièrement intéressante, est décrite dans ce qui suit.

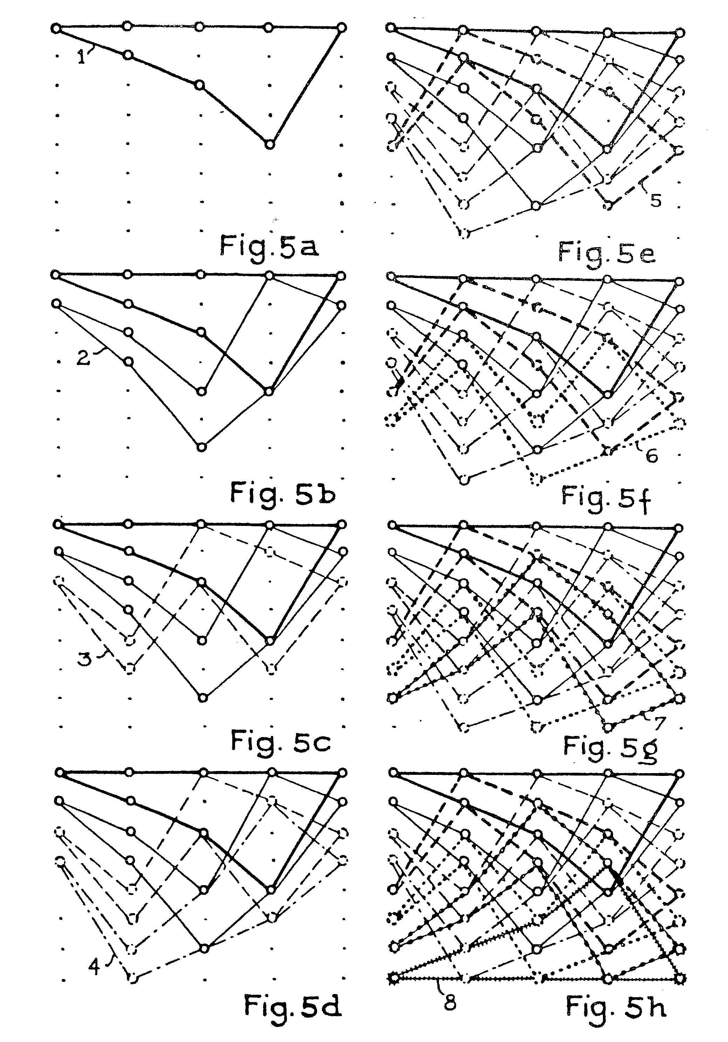

Tout réseau R (p, k) peut être construit à partir d'un module initial de (p/2 · k) + 1 nœuds réunis en boucle. Pour le réseau R (4, 3) on a représenté, à la figure 5a, un module initial 1 de sept nœuds réunis en boucle, en utilisant les liaisons représentées à la figure 1, ce qui constitue la boucle suivante :

11-21-31-41-11-45-33-22-11

Ensuite, le réseau est étendu par adjonctions successives de boucles analogues qui viennent se brancher en au moins p/2 nœuds sur le réseau en cours de construction.

Pour le réseau R (4, 3) on a représenté à la figure 5b une première extension. Un second module 2 de sept nœuds se branche sur les nœuds 41 et 45 du module 1 initial et constitue la boucle suivante :

12-23-35-41-12-45-37-24-12

La figure 5c représente une deuxième extension. Un troisième module 3 de sept nœuds se branche sur les nœuds 31 et 33 et constitue la boucle suivante :

13-25-31-42-13-46-32-26-13

La figure 5d représente une troisième extension. Un quatrième module 4 de sept nœuds se branche sur les nœuds 35, 37, 42 et 46 et constitue la boucle suivante :

14-27-35-42-14-46-37-28-14

La figure 5e représente une quatrième extension. Un cinquième module 5 de sept nœuds se branche sur les nœuds 21 et 22 et constitue la boucle suivante :

15-21-32-43-15-47-34-22-15

La figure 5f représente une cinquième extension. Un sixième module 6 de sept nœuds se branche sur les nœuds 23, 24, 43 et 47 et constitue la boucle suivante :

16-23-36-43-16-47-38-24-16

La figure 5g représente une sixième extension. Un septième module 7 de sept nœuds se branche sur les nœuds 25, 26, 32 et 34 et constitue la boucle suivante :

17-25-32-44-17-48-34-26-17

La figure 5h représente une septième extension qui est la dernière et qui permet d'obtenir un réseau R (3, 4) complet tel que représenté à la figure 1. Un huitième module 8 de sept nœuds se branche sur les nœuds 27, 28, 36, 38, 44 et 48 et constitue la boucle suivante :

18-27-36-44-18-48-38-28-18

Ce procédé d'extension présente de nombreux avantages. Un premier avantage consiste en ce que à toute phase d'extension, la distance maximale TM est égale à celle du réseau complet ce qui permet de penser que le trafic admissible sur un réseau incomplet est proportionnel au nombre de modules installés.

Un deuxième avantage réside dans les facilités de câblage, en effet à chaque extension interviennent de nouveaux câblages mais aucun recâblage n'est nécessaire, c'est-à-dire qu'une connexion établie n'est plus modifiée.

Un troisième avantage de cette procédure d'extension est d'offrir la meilleure sécurité possible, c'est-à-dire qu'à chaque extension tout couple d'opérateurs peut être réuni par un nombre de chemins indépendants (pour ce qui est liaisons empruntées) égal au minimum des connexions des deux opérateurs considérés.

Enfin, un quatrième avantage est d'avoir un pas d'extension raisonnablement petit par rapport au nombre total d'opérateurs et un grand nombre $((P/2)^k - 1)$ d'extensions possibles. Par exemple, dans le cas du réseau R (8, 4) comportant 1 280 opérateurs (voir tableau I) le pas d'extension minimal est égal à 17 opérateurs, c'est-à-dire 1,3 % du nombre d'opérateurs du réseau complet et il y a 255 extensions du module initial au réseau complet.

Le réseau R (p, k) conforme à l'invention, présente donc de nombreux avantages aussi bien au point de vue acheminement qu'au point de vue extension et maintenance.

Un second exemple d'application consiste en l'utilisation de deux types d'opérateurs.

6

**0 021 932**

On utilise un premier type d'opérateurs dit « terminal » sur une génératrice par exemple G ($i_o$), c'est-à-dire pour les opérateurs de coordonnées ($i_o$, j), $i_o$ étant une valeur particulière de i comprise entre 1 et h. Ces opérateurs terminaux comportent un niveau de commutation relié aux autres opérateurs du réseau, une interface vers l'extérieur du réseau et un niveau supérieur constitué par un microcalculateur de commande du niveau de commutation et de l'interface vers l'extérieur.

On utilise un second type d'opérateurs dit « de transit interne » sur les (h − 1) autres génératrices.

Ces opérateurs de transit interne comportent uniquement un niveau de commutation relié aux autres opérateurs du réseau et un niveau supérieur constitué par un microcalculateur de commande du niveau de commutation, ce niveau supérieur ayant une « intelligence » et une capacité mémoire considérablement réduites par rapport à celles du niveau supérieur d'un opérateur terminal.

Les opérateurs du second type ne comportent pas de liaison directe avec l'extérieur du réseau, on a donc introduit des différences de niveau hiérarchique et l'on a conféré au réseau une structure hiérarchisée.

La taille d'un réseau est déterminée par le volume V maximal de voies de transmission qu'il aura à commuter. Un réseau conforme à l'invention nécessite N1 = V/m opérateurs du premier type et N2 = V/m[$\log_{p/2}$ (V/m) − 1] opérateurs du second type.

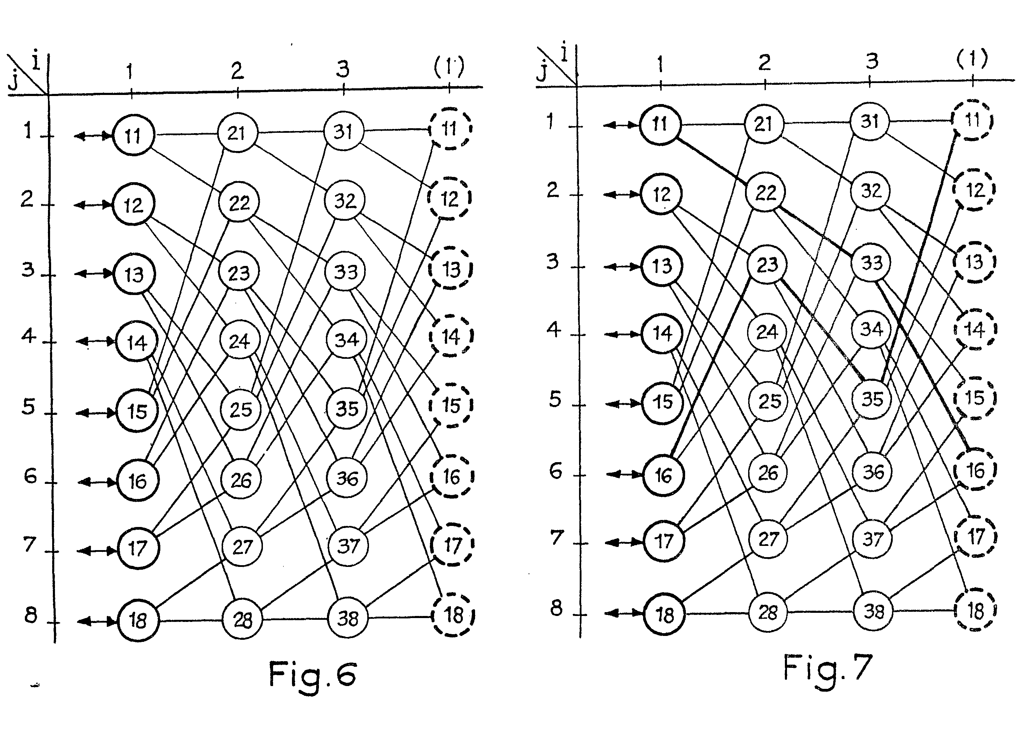

Dans l'exemple que l'on va décrire et qui est représenté à la figure 6, chaque opérateur est relié directement à 4 autres opérateurs du réseau, c'est-à-dire que p est égal à 4. D'autre part, on suppose que V/m est égal à 8, ce qui donne N1 égal à 8 et N2 égal à 16.

Ce réseau G (4, 3) comporte 3 génératrices : (k = $\log_{p/2}$ V/m = $\log_2$ 8 = 3) et 8 opérateurs par génératrice, il s'agit donc d'un réseau D (p, k, o).

La première génératrice ($i_o$ = 1) comporte des opérateurs terminaux qui sont représentés par des cercles en traits forts avec une double flèche qui indique la connexion avec l'extérieur du réseau et qui sont numérotés de 11 à 18.

Les deux autres génératrices sont constituées par des opérateurs de transit interne représentés par des cercles en traits fins et numérotés de 21 à 28 pour le premier et de 31 à 38 pour le second.

La première génératrice faisant suite à la troisième au point de vue connexion, on l'a représenté une seconde fois en pointillé afin que la figure soit plus claire. Les connexions sont établies conformément à la description générale d'un réseau D (p, k, a) et sur les figures, un opérateur de coordonnées (i, j) porte le numéro ij.

Donc l'opérateur (1, 1) est relié aux opérateurs (2, 1) et (2, 2) de la génératrice suivante et aux opérateurs (3, 1) et (3, 5) de la génératrice précédente.

L'opérateur (1, 2) est relié aux opérateurs (2, 3), (2, 4), (3, 1) et (3, 5).
L'opérateur (1, 3) est relié aux opérateurs (2, 5), (2, 6), (3, 2) et (3, 6).
L'opérateur (1, 4) est relié aux opérateurs (2, 7), (2, 8), (3, 2) et (3, 6).
L'opérateur (1, 5) est relié aux opérateurs (2, 1), (2, 2), (3, 3) et (3, 7).
L'opérateur (1, 6) est relié aux opérateurs (2, 3), (2, 4), (3, 3) et (3, 7).
L'opérateur (1, 7) est relié aux opérateurs (2, 5), (2, 6), (3, 4) et (3, 8).
L'opérateur (1, 8) est relié aux opérateurs (2, 7), (2, 8), (3, 4) et (3, 8).

Pour avoir toutes les liaisons, il ne reste plus à donner que les liaisons entre la deuxième et la troisième génératrice.

L'opérateur (2, 1) est relié aux opérateurs (3, 1) et (3, 2).
L'opérateur (2, 2) est relié aux opérateurs (3, 3) et (3, 4).
L'opérateur (2, 3) est relié aux opérateurs (3, 5) et (3, 6).
L'opérateur (2, 4) est relié aux opérateurs (3, 7) et (3, 8).
L'opérateur (2, 5) est relié aux opérateurs (3, 1) et (3, 2).
L'opérateur (2, 6) est relié aux opérateurs (3, 3) et (3, 4).
L'opérateur (2, 7) est relié aux opérateurs (3, 5) et (3, 6).
L'opérateur (2, 8) est relié aux opérateurs (3, 7) et (3, 8).

On expose maintenant les propriétés d'un réseau de commutation G (p, k) conforme à l'invention.

Le réseau étant symétrique par rapport à chaque opérateur terminal, le calcul des distances (égales au nombre d'opérateurs traversés plus un) maximale TM et moyenne Tm entre deux opérateurs terminaux quelconques ne nécessite que N1−1 évaluations au lieu de $C_{N1}^2$ dans le cas d'un réseau quelconque.

La distance maximale TM dans un réseau conforme à l'invention est égale à k.

La distance moyenne Tm est égale à $\beta + 1/2 \cdot 1/2^\beta - 1/\sqrt{2^\beta} (4 - 1/\sqrt{2})$ dans le cas où p est égal à 4.

Le tableau suivant permet une comparaison de TM et Tm dans le cas où p est égal à 4.

| k | 3 | 4 | 5 | 6 |
|----|----|----|----|----|
| N1 | 8 | 16 | 32 | 64 |
| N2 | 16 | 48 | 128 | 320 |

7

| k | 3 | 4 | 5 | 6 |
|---|---|---|---|---|
| TM | 3 | 4 | 5 | 6 |
| Tm | 1,9 | 3,2 | 4,4 | 5,6 |

Dans les réseaux de commutation il est important de minimiser la distance maximale TM, car la durée maximale de traversée du réseau en dépend ; en outre, dans le cas d'une transmission par paquets autodirigés, la longueur de l'en-tête de chaque paquet, qui indique les différents opérateurs à traverser, dépend également de cette distance maximale TM.

La distance moyenne Tm doit également être minimisée car la capacité globale de commutation des opérateurs en est directement fonction. En effet, si le débit injecté au réseau est égal à A Meb/s, le débit total écoulé dans l'ensemble des liaisons du réseau est A.Tm.

Dans les réseaux conformes à l'invention les distances Tm et TM sont très proches du minimum théorique.

Le fait que tout opérateur terminal joue un rôle identique à tous les autres opérateurs terminaux simplifie les algorithmes de recherche de chemin et de diffusion et permet un câblage d'une grande régularité.

Une autre propriété de ces réseaux G (p, k) est d'offrir une très grande sécurité. En effet, entre deux opérateurs terminaux quelconques il est toujours possible de trouver deux chemins disjoints, c'est-à-dire n'ayant aucun opérateur et aucune liaison en commun, de longueur $\beta$.

A la figure 7, on a représenté dans le réseau G (4, 3) deux chemins indépendants de longueur 3 entre le nœud (1, 1) et le nœud (1, 6). Ces deux chemins sont les suivants :

$$(1, 1)\text{-}(2, 2)\text{-}(3, 3)\text{-}(1, 6)$$
$$(1, 1)\text{-}(2, 3)\text{-}(3, 5)\text{-}(1, 6)$$

Une autre propriété des réseaux conformes à l'invention réside dans les procédures d'extension ; l'une d'elles, particulièrement intéressante, est décrite dans ce qui suit.

Tout réseau G (p, k) peut être construit à partir d'un module initial de $P/2 + (P/2)^2 (k - 1)$ opérateurs qui comprend P/2 opérateurs de la génératrice terminale et $(P/2)^2$ opérateurs de transit interne de chacune des (k − 1) autres génératrices.

Dans notre exemple G (4, 3), un module initial 11 est constitué à partir des opérateurs terminaux (1, 1) et (1, 8) ; il comprend les liaisons et opérateurs qui constituent les chemins suivants (voir figure 8a) :

$$(1, 1)\text{-}(2, 1)\text{-}(3, 1)\text{-}(1, 1)$$
$$(1, 8)\text{-}(2, 2)\text{-}(3, 4)\text{-}(1, 8)$$
$$(1, 1)\text{-}(2, 7)\text{-}(3, 5)\text{-}(1, 1)$$
$$(1, 8)\text{-}(2, 8)\text{-}(3, 8)\text{-}(1, 8)$$

Ensuite, le réseau est étendu par adjonctions successives de modules analogues qui viennent se brancher en au moins $(P/2)^2$ opérateurs du réseau déjà construit.

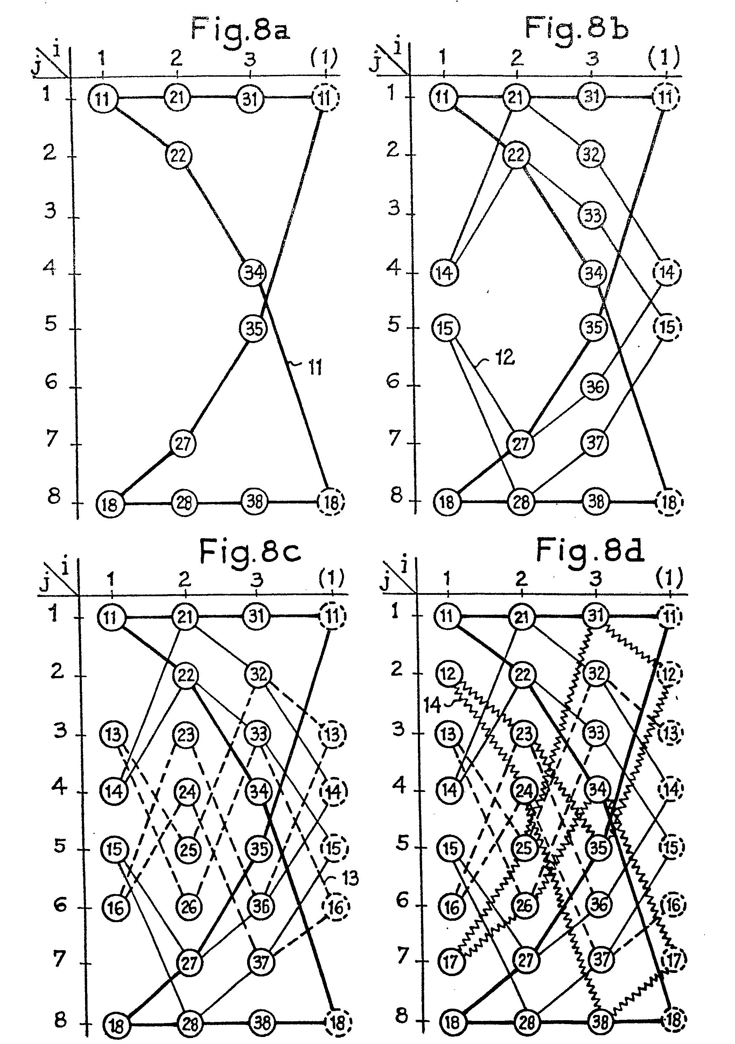

Dans notre exemple G (4, 3), on a représenté à la figure 8b une première extension. Un module d'extension 12 constitué à partir des opérateurs terminaux (1, 4) et (1, 5) se branche sur les opérateurs (2, 1), (2, 2), (2, 7) et (2, 8). Ce module 12 comprend les opérateurs et liaisons qui constituent les chemins suivants :

$$(1, 4)\text{-}(2, 1)\text{-}(3, 2)\text{-}(1, 4)$$
$$(1, 4)\text{-}(2, 2)\text{-}(3, 3)\text{-}(1, 5)$$
$$(1, 5)\text{-}(2, 7)\text{-}(3, 6)\text{-}(1, 4)$$
$$(1, 5)\text{-}(2, 8)\text{-}(3, 7)\text{-}(1, 5)$$

La figure 8c représente une deuxième extension par adjonction d'un module 13 constitué à partir des opérateurs terminaux (1, 3) et (1, 6). Ce module 13 comprend les opérateurs et les liaisons qui constituent les chemins suivants :

$$(1, 3)\text{-}(2, 5)\text{-}(3, 2)\text{-}(1, 3)$$
$$(1, 3)\text{-}(2, 6)\text{-}(3, 3)\text{-}(1, 6)$$
$$(1, 6)\text{-}(2, 3)\text{-}(3, 6)\text{-}(1, 3)$$
$$(1, 6)\text{-}(2, 4)\text{-}(3, 7)\text{-}(1, 6)$$

La figure 8d représente une troisième et dernière extension par adjonction d'un module 14 constitué à partir des opérateurs terminaux (1, 2) et (1, 7) ce module 14 comprend les opérateurs et les liaisons qui constituent les chemins suivants :

$$(1, 2)-(2, 3)-(3, 5)-(1, 2)$$
$$(1, 2)-(2, 4)-(3, 8)-(1, 7)$$
$$(1, 7)-(2, 5)-(3, 1)-(1, 2)$$
$$(1, 7)-(2, 6)-(3, 4)-(1, 7)$$

Cette procédure d'extension présente de grandes facilités de câblage, en effet à chaque extension on opère de nouveaux câblages mais aucun recâblage, c'est-à-dire qu'une connexion établie n'est plus modifiée par la suite.

Un autre avantage est d'avoir les mêmes propriétés pour un réseau incomplet que pour le réseau complètement équipé au point de vue distance maximale et chemins indépendants entre deux opérateurs terminaux.

## Revendications

1. Réseau de commutation comportant N opérateurs, chaque opérateur étant relié directement par p liaisons à p autres opérateurs du réseau, p étant un nombre entier pair, les opérateurs étant répartis sur h colonnes (G1 à Gh), h étant un nombre entier quelconque, en ce que chaque colonne comportant $(P/2)^k$ opérateurs, numérotés de 1 à $(p/2)^k$, k étant un nombre entier quelconque, caractérisé en ce qu'un opérateur quelconque de coordonnées (i, j), i étant la colonne ($1 \leqslant i \leqslant h$) sur laquelle se situe l'opérateur et j étant le rang de l'opérateur dans la colonne ($1 \leqslant j \leqslant (p/2)^k$), est relié par P/2 liaisons à P/2 opérateurs Ax ($1 \leqslant x \leqslant P/2$) de la colonne suivante, Ax ayant pour coordonnées :

$$((i + 1) \text{ modulo } h, [x + P/2 (j - 1)] \text{ modulo } (P/2)^k).$$

2. Réseau de commutation selon la revendication 1, caractérisé en ce que tous les opérateurs sont identiques et comportent chacun une interface vers l'extérieur du réseau, un niveau de commutation relié à p autres opérateurs du réseau et un niveau supérieur constitué par un microcalculateur de commande du niveau de commutation et de l'interface vers l'extérieur.

3. Réseau de commutation pour centre de télécommunications selon la revendication 2, ayant une structure répartie et dans lequel h est égal à k + 1, caractérisé en ce qu'il est construit à partir d'un module initial (1) de $P/2 \cdot k) + 1$ opérateurs réunis en boucle par des liaisons définies dans la revendication 1.

4. Réseau de commutation pour centre de télécommunications, construit à partir d'un module initial (1) selon la revendication 3, étendu par adjonction de modules d'extension, caractérisé en ce qu'un module d'extension (2, 3, 4, 5, 6, 7 ou 8) comporte $(P/2 \cdot k) + 1$ opérateurs dont au moins p/2 appartiennent au réseau déjà existant et qui sont réunis en boucle par des liaisons définies dans la revendication 1.

5. Réseau de commutation selon la revendication 1, caractérisé en ce que les opérateurs de coordonnées $(i_o, j)$, $i_o$ étant une valeur particulière de i comprise entre 1 et h et avec $1 \leqslant j \leqslant (p/2)^k$, sont d'un premier type et comportent une interface vers l'extérieur du réseau, un niveau de commutation relié à p autres opérateurs du réseau et un niveau supérieur constitué par un microcalculateur de commande du niveau de commutation et de l'interface vers l'extérieur, et en ce que les opérateurs de coordonnées (i, j), i étant différent de $i_o$ avec $1 \leqslant i \leqslant h$ et $1 \leqslant j \leqslant (p/2)^k$, sont d'un second type qui ne comporte pas d'interface vers l'extérieur du réseau, mais comporte un niveau de commutation relié à p autres opérateurs du réseau et un niveau supérieur constitué par un microcalculateur de commande du niveau de commutation.

6. Réseau de commutation pour centre de télécommunications selon la revendication 5 ayant une structure hiérarchisée et dans lequel h est égal à k, caractérisé en ce qu'il est construit à partir d'un module initial (11) de $(p/2) + (p/2)^2 (k - 1)$ opérateurs dont p/2 opérateurs de la colonne terminale et $(p/2)^2$ opérateurs de transit interne de chacune des k − 1 autres colonnes réunies par des liaisons définies dans la revendication 1.

7. Réseau de commutation à structure hiérarchisée pour centre de télécommunications, construit à partir d'un module initial (11) selon la revendication 6, étendu par adjonction de modules d'extension, caractérisé en ce qu'un module d'extension (12, 13 ou 14) comporte $(p/2) + (p/2)^2 (k - 1)$ opérateurs dont p/2 opérateurs de colonne terminale et $(p/2)^2$ opérateurs de transit interne de chacun des (k − 1) autres colonnes, $(p/2)^2$ opérateurs de transit interne appartenant au réseau déjà existant et l'ensemble des opérateurs étant réunis par des liaisons définies dans la revendication 1.

8. Réseau de commutation selon l'une quelconque des revendications 1 à 7, caractérisé en ce que les liaisons entre opérateurs sont des voies de transmission numériques bidirectionnelles.

9. Centre de télécommunications, caractérisé en ce qu'il comporte un réseau de commutation selon l'une quelconque des revendications 1 à 8.

**Claims**

1. Commutation network comprising N operators, each operator being directly connected by p connections to p other operators of the network, p being an even integer, the operators being distributed on h columns (G1 to Gh), h being any integer any integer, characterized in that any operator of coordinates (i, j), i being the column ($1 \leqslant i \leqslant h$) on which is located the operator and j being the rank of the operator in the column ($1 \leqslant j \leqslant (p/2)^k$), is connected by p/2 connections to p/2 operators Ax ($1 \leqslant x \leqslant p/2$) of the following column, Ax having for coordinates :

$$((i + 1) \text{ modulo } h, [x + p/2 (j - 1)] \text{ modulo } (p/2)^k)$$

2. Commutation network according to claim 1, characterized in that all the operators are identical and each comprises an interface towards the outside of this network, a commutation level connected to p other operators of the network and an upper level constituted by a control microprocessor of the commutation level and the interface towards the outside.

3. Commutation network for a telecommunications centre according to claim 2, having a distributed structure and in which h is equal to K + 1, characterized in that it is constructed from an initial module (1) of (p/2 · k) + 1 operators joined up in a closed circuit by the connections defined in claim 1.

4. Commutation network for a telecommunications centre, constructed from an initial module (1) according to claim 3, extended by the adjunction of extension modules, characterized in that an extension module (2, 3, 4, 5, 6, 7 or 8) comprises (p/2 · k) + 1 operators, at least p/2 of which belong to the already existing network and that are joined up in a closed circuit by connections defined in claim 1.

5. Commutation network according to claim 1, characterized in that the operators of the coordinates ($i_o$, j), $i_o$ being a particular value of i comprised between 1 and h and with $1 \leqslant j \leqslant (p/2)^k$, are of a first type and comprise an interface towards the outside of the network, a commutation level connected to p other operators of the network and an upper level constituted by a control microprocessor for the level of commutation and the interface towards the outside, and in that the operators of coordinates (i, j), i being different from $i_o$ with $1 \leqslant i \leqslant h$ and $1 \leqslant j \leqslant h (p/2)^k$, are of a second type that does not comprise an interface towards the outside of the network, but comprise a commutation level connected to p other operators of the network and an upper level constituted by a control microprocessor for the level of commutation.

6. Commutation network for a telecommunications centre according to claim 5, having a hierarchized structure and in which h is equal to k, characterized in that it is constructed from an initial module (11) of (p/2) + $(p/2)^2$ (k − 1) operators of which p/2 operators of the terminal column and $(p/2)^2$ internal transit operators of each of the k − 1 other columns joined up by the connections defined in claim 1.

7. A commutation network of hierarchized structure for a telecommunications centre, constructed from an initial model (11) according to claim 6, extended by adjunction of extension modules, characterized in that an extension module (12, 13 or 14) comprise (p/2) + $(p/2)^2$(k − 1) operators of which p/2 operators of the terminal column and $(p/2)^2$ internal transit operators of each of the (k − 1) other columns, $(p/2)^2$ internal transit operators belonging to the already existing network and the assembly of the operators being joined up by the connections defined in claim 1.

8. Commutation network according to one of claims 1 to 7, characterized in that the connections between the operators are bidirectional digital transmissions paths.

9. Telecommunications centre, characterized in that it comprises a commutation network according to one of claims 1 to 8.

**Ansprüche**

1. Ein aus N Operatoren gebildetes Schaltnetz, in dem jeder Operator unmittelbar durch p Verbindungen mit p anderen Operatoren des Netztes verbunden ist, mit p einer ganzen geraden Zahl, in dem die Operatoren auf h Säulen (G1 bis Gh) verteilt sind, mit h irgendeiner ganzen Zahl, in dem jede Säule $(p/2)^k$ Operatoren besitzt, die von 1 bis $(p/2)^k$ nummeriert sind, mit k irgendeiner ganzen Zahl, dadurch gekennzeichnet, dass irgendein Operator mit den Koordinaten (i, j), wovon i die Säule ($1 \leqslant i \leqslant h$) ist auf welcher sich der Operator befindet und j die Stelle des Operators in der Säule ($1 \leqslant j \leqslant (p/2)^k$), durch p/2 Verbindungen mit p/2 Operatoren Ax ($1 \leqslant x \leqslant p/2$) der nachfolgenden Säule verbunden ist, wobei die Koordinaten von Ax sind :

$$((i + 1) \text{ modulo } h, [x + p/2 (j - 1)] \text{ modulo } (p/2)^k).$$

2. Schaltnetz nach Anspruch 1, dadurch gekennzeichnet, dass alle Operatoren gleichartig sind und jeder Operator besteht aus ainer « Interface » in Richtung ausserhalb des Netzes, einem Schaltniveau, welches mit p anderen Operatoren des Netztes verbunden ist, und einem höheres Niveau welches durch einen Mikrorechner zur Steuerung des Schaltniveaus und der « Interface » in Richtung nach Aussen gebildet ist.

3. Schaltnetz für Fernmeldezentrum nach Anspruch 2, mit gleichförmiger Struktur und in dem h gleich k + 1 ist, dadurch gekennzeichnet, dass es gebildet ist ausgehend von einem Eingangsmodul (1) aus $(p/2 \cdot k) + 1$ Operatoren, die in Schleifenform durch in Anspruch 1 definierte Verbindungen verbunden sind.

4. Schaltnetz für Fernmeldezentrum errichtet von einem Anfangsmodul (1) nach Anspruch 3 ausgehend, erweitert durch Hinzufügung von Erweiterungsmodulen und dadurch gekennzeichnet, dass ein Erweiterungsmodul (2, 3, 4, 5, 6, 7, oder 8) $(p/2 \cdot k) + 1$ Operatoren enthält, von denen mindestens p/2 zum schon vorhandenen Netz gehören und die in Schleifenform durch in Anspruch 1 definierte Verbindungen verbunden sind.

5. Schaltnetz nach Anspruch 1, dadurch gekennzeichnet, dass die Operatoren mit den Koordinaten $(i_o, j)$, von denen $i_o$ ein besonderer Wert von i zwischen 1 und h ist und $1 \leqslant j \leqslant (p/2)^k$, von einem ersten Typ sind und bestehen aus einer « Interface » zum Netzsäusseren einem Schaltniveau, das mit p anderen Operatoren verbunden ist und einem höheres Niveau, das durch einen Mikrorechner zur Steuerung des Schaltniveaus und die « Interface » nach Aussen gebildet ist, und dass die Operatoren mit den Koordinaten $(i, j)$, von denen i verschieden von $i_o$ ist mit $1 \leqslant i \leqslant h$ und $1 \leqslant j \leqslant (p/2)^k$, von einem zweiten Typ sind der keine « Interface » zum Netzäusseren hat, jedoch ein mit p anderen Operatoren des Netzes verbundenes Schaltniveau und ein höheres, durch einen Mikrorechner zur Steuerung des Schaltniveaus bestehen des Niveau enthält.

6. Schaltnetz für Fernmeldezentrum nach Anspruch 5 mit einer rangförmigen Struktur und in dem h gleich k ist, dadurch gekennzeichnet, dass es gebildet ist ausgehend von einem Anfangsmodul (11) aus $(p/2) + (p/2)^2 (k - 1)$ Operatoren, von denen sind p/2 Operatoren der Endsäule und $(p/2)^2$ Operatoren zum inneren Transit von jeder der k − 1 anderen Säulen die durch in Anspruch 1 definierte Verbindungen verbunden sind.

7. Schaltnetz von rangförmiger Struktur für Fernemeldezentrum, gebildet ausgehend von einem Anfangsmodul (11) nach Anspruch 6, erweitert durch Hinzufügung von Erweiterungsmodulen, dadurch gekennzeichnet, dass ein Erweiterungsmodul (12, 13 oder 14) $(p/2) + (p/2)^2 (k - 1)$ Operatoren umfasst, von denen p/2 Operatoren der Endsäule und $(p/2)^2$ Operatoren zum inneren Transit von jeder der (k − 1) anderen Säulen sind, dass $(p/2)^2$ Operatoren zum inneren Transit zum schon vorhandenen Netz gehören und die Gesamtheit der Operatoren mittels in Anspruch 1 definierte Verbindungen verbunden ist.

8. Schaltnetz nach irgendeinem der Ansprüche 1 bis 7, dadurch gekennzeichnet, dass die Verbindungen zwischen Operatoren in zweifache Richtung gehende numerische Uebertragungswege sind.

9. Fernmeldezentrum dadurch gekennzeichnet, dass es ein Schaltnetz nach irgendeinem der Ansprüche 1 bis 8 besitzt.

Fig.1

Fig. 2a

Fig. 2b

0 021 932

Fig.3

Fig.4

Fig. 5a

Fig. 5e

Fig. 5b

Fig. 5f

Fig. 5c

Fig. 5g

Fig. 5d

Fig. 5h

Fig.6

Fig.7

0 021 932

0 021 932

Fig.8a

Fig.8b

Fig.8c

Fig.8d